# EUROPEAN PATENT APPLICATION

(11) **EP 2 336 672 A1**
(43) Date of publication of application: **22.06.2011**
(21) Application number: 09015649.8
(22) Date of filing: 17.12.2009
(51) Int. Cl.: F24J 2/52

(54) **Mounting system for solar panels**

(71) Applicant: Pohlen Solar GmbH, 52511 Geilenkirchen (DE)
(72) Inventor: Rauschen, Igor, 52428 Jülich (DE); Zastrow, Alexander, 52511 Geilenkirchen (DE)
(74) Representative: Gehrig, Philip Walter

(57) **Abstract**

The present invention provides a mounting system for mounting one or more solar panels (S), comprising: a support frame (2) having a plurality of frame members (3) adapted to be arranged spaced apart and substantially parallel to one another on a substantially flat rooftop surface (R), wherein the frame members (3) provide a panel mounting area (A) which is inclined relative to a horizontal plane for supporting solar panels (S) extending between the frame members (3); and mounting rails (7) positioned on and extending transverse to the frame members (3), wherein the mounting rails (7) delimit upper and lower edge regions of the inclined panel mounting area (A) on the support frame (2). The support frame (2) is substantially closed across a rear extent of the mounting system (1) below the upper edge region of the panel mounting area (A) by a surface (14) for directing wind over solar panels (S) in the inclined panel mounting area (A). Furthermore, the support frame (2) provides an opening (15) across a substantial frontal extent of the mounting system (1) below the lower edge region of the panel mounting area (A), such that the opening (15) communicates with a space under the solar panels (S).

## Description

### Technical Field

The present invention relates to a mounting system for mounting one or more solar panels, and to an assembly comprising one or more solar panels in combination with the mounting system of the invention.

The mounting system of the invention is particularly suitable for use mounting solar panels on flat rooftops, especially on flat rooftops covered with a sealing layer, such as a polymeric, bituminous, or tar-based membrane, and it will be convenient to describe the invention in this exemplary context. It will be appreciated, however, that the mounting system and assembly of the invention are also suitable for use on other types of rooftops or supporting structures.

### Background of the Invention

As a result of an increasing trend towards the adoption of renewable energy sources, the installation of solar panels, in particular of arrays of photo-voltaic (PV) panels or modules, is gaining in popularity, not only for industrial and institutional applications, but also in the domestic and rural environments. Whether for the industrial, institutional, domestic or rural environment, the solar panels are often mounted on the rooftops of buildings - most typically in the area where the solar energy is required. Roof structures are particularly convenient for this purpose as they present a large surface area directed towards the sun, which is both out of the way and often largely out of view from the normal visual perspective, thereby rendering the installations relatively unobtrusive. Horizontal or flat rooftops are particularly convenient for this purpose as they provide an even and stable working environment for the assembly, installation and maintenance of a solar panel array.

When installing a solar panel array on a flat rooftop, one important consideration is, of course, to achieve a desirable orientation or angle of the solar panels toward the sun. Another important consideration is to minimise the effects of wind-loading on the solar panel assembly. In many cases, also, horizontal or flat rooftops have a sealing layer as an outer covering and this sealing layer is typically formed by a flexible membrane of a rubber-based or polymer material, sometimes including bituminous or tar-based compounds. That is, the sealing layer or "skin" of flat rooftops is often formed by one or more sheets of a flexible material selected from the group including thermoplastic polyolefins (TPOs) or flexible polyolefins, ethylene-propylene-diene M-class rubber (EPDM), polyvinylchloride (PVC) and polymer-bitumen sheeting. Some of these materials have been in use in roofing structures since the 1960s and, as such, are commonly found on the rooftops of existing buildings today. Such rooftops present particular problems in the mounting of solar panel arrays.

Known techniques with which solar panel arrays have conventionally been fastened or secured on such flat rooftop surfaces include, for example, the use of bolts and/or screw-fasteners, the use of weights or ballast to anchor or hold down an array, and the use of adhesive and solvent bonding, and cold or hot fusion or welding. Bolts and screw fasteners have the disadvantage that they penetrate the roof "skin" or sealing layer, which compromises the waterproof properties of the membrane and creates a potential source of rainwater leakage or seepage into the roof structure. This risk may be heightened in the event that the solar panel array ever needs to be disassembled and removed from the rooftop. The use of weights or ballast, on the other hand, can be cumbersome and may not appropriate for all rooftops because it substantially increases the loading on the roof structure.

In view of the above problems, it is an object of the present invention to provide a new and improved mounting system with which one or more of these problems may be overcome or at least minimized. In particular, it is an object of the invention to provide a mounting system for one or more solar panels with which wind-loads can be reduced, and/or which is suitable for use on flat rooftops having a sealing layer formed by a flexible membrane.

### Summary of the Invention

According to one aspect, the present invention provides a system for mounting one or more solar panels, the system comprising: a support frame having a plurality of frame members adapted to be arranged spaced apart and substantially parallel to one another on a rooftop surface, wherein the frame members define a panel mounting area which is inclined relative to a horizontal plane (e.g. a flat rooftop surface) for supporting solar panels extending between two or more of the frame members; and mounting rails, which are positioned on and extend transverse to the frame members, wherein the mounting rails delimit upper and lower edge regions of the inclined panel mounting area on the support frame. Preferably, the mounting system includes a surface across a rear extent of the support frame for directing wind over solar panels arranged in the inclined panel mounting area, and particularly for directing wind from the rear over an upper edge region of the solar panels. To this end, the support frame may be covered or closed (e.g. by one or more sheet or panel defining the wind-directing surface) across a substantial rear extent or width thereof below the upper edge region of the panel mounting area, e.g. between the upper edge region of the panel mounting area and the rooftop surface. Thus, the mounting system may comprise one or more sheet or panel which substantially covers or closes a rear extent or width of the support frame, and the sheet(s) or panel(s) may be designed to be removably inserted below the upper edge region of the solar panel mounting area.

The wind-directing surface provided by substantially closed rear extent or width of the support frame contributes greatly to achieving the desired aerodynamic geometry in the mounting system. That is, the wind-directing surface across the rear extent of the support frame directs or guides wind (e.g. in Europe, wind from the North) over the solar panel array. The wind-directing surface is typically inclined relative to a horizontal plane (e.g. relative to a flat rooftop surface) at an angle in the range of about 55° to 85°, and more preferably in the range of about 60° to 80°. The panel mounting area, on the other hand, is preferably inclined relative to the horizontal plane (e.g. the flat rooftop surface) at an angle in the range of about 10° to 30°, preferably in the range of about 10° to 20°, and most preferably at an angle of about 15°. Such an angle may not be optimal for an individual panel in Northern Europe, but with such an angle multiple panels can be arranged in rows so closely adjacent to one another without adverse shading that the degree of efficiency for a rooftop completely filled with solar panels is then very satisfactory.

Furthermore, in a preferred form of the invention, the support frame of the mounting system is configured to provide an opening across a substantial frontal extent or width of the support frame below the lower edge region of the panel mounting area, wherein the opening communicates with a space under the solar panels. In other words, the mounting system provides an opening under a lower edge of the panels mounted on the support frame, and this opening extends across a substantial frontal width, preferably across the entire width, of the support frame and the panel mounting area.

In this way, when assembled with solar panels, the mounting system of the invention provides a construction having particularly advantageous aerodynamic properties. As a result of the geometry of this construction, the solar panel mounting system experiences relatively low wind-loads compared with known systems. These wind-loads can be resolved into vertically acting loads, which act either to lift the panel array or press it into contact with the roof surface, and horizontally acting loads, which tend to push or move the solar panel array over the roof surface. By reducing the loads which act vertically and tend to lift the solar panel array, the amount of ballast used in anchoring the system can be significantly reduced compared with conventional arrangements, thereby making a solar panel array viable for roof structures that may previously have been deemed insufficiently robust to support the additional weight of large ballast loads. Furthermore, a reduction in the amount of ballast required can also simplify the job of installing the solar panel array.

In a preferred form of the invention, the support frame is open at lateral sides thereof for communication with the space under the solar panels, and therefore also with the opening across the front extent of the frame. This enhances the aerodynamic design of the assembly of the mounting system and solar panels. Furthermore, it can reduce the wind-load generated by side winds substantially.

In a preferred form of the invention, each of the frame members of the support frame comprises an open framework of elongate elements. For example, each of the frame members desirably comprises a triangular construction of elongate frame elements including: a base element configured to be secured to the rooftop surface, a pitched or inclined bearing element defining the inclined panel mounting area for receiving the solar panel, and a rear support or strut element. By forming each of the frame members with an open framework structure, the space below the solar panels remains substantially open for uninterrupted air-flow there-through.

In a preferred form of the invention, each of the frame members is collapsible to a substantially flat configuration for transport. In this respect, the elongate elements of each frame member may be configured for hinged connection with one another. Furthermore, to enhance the collapsibility of the frame members, either or both of the base element and/or the bearing element may comprise an open section, such as a channel section or an L-section, wherein either the base element or the bearing element is configured to receive the other within its open section in the collapsed state or configuration.

In a preferred form of the invention, the panel receiving area is defined between side or lateral surfaces of the mounting rails. In other words, the mounting rails are not configured to receive the panels seated upon a top-side or uppermost surface thereof, but rather in contact with the side or lateral surfaces of the mounting rails. That is, each mounting rail preferably includes a seating area, e.g. in the form of a shoulder or step formed in a cross-section of the respective rail, for receiving an edge of the respective solar panel in a position which is at least partially countersunk with respect to a top-side or an uppermost surface of the mounting rail. Thus, the panel mounting area is desirably recessed between the mounting rails at the upper and lower edge regions. This configuration has the substantial advantage that a rim or edge-frame of each solar panel or PV-module need not be load-bearing.

In a preferred form of the invention, securing means for securely attaching the solar panels to the support frame are provided on the mounting rails. The securing means preferably comprise a plurality of bracket or clip members which are fastened to the mounting rails to at least partially overlie the rim or edge-frame of the respective solar panels. Thus, after each solar panel or PV-module is received within the recess of the panel mounting area between the mounting rails, one or more of the bracket or clip members may be fixed to the mounting rails to overlie the outwardly facing rim or edge-frame of the respective solar panel to securely hold or retain that solar panel or PV-module within the panel mounting area on the support frame. In this respect, each bracket or clip member preferably has a fastening portion to be rigidly fastened to the mounting rail and a holding portion for overlying or engaging the rim or edge-frame of the respective solar panel. The holding portion may thus form a clamp-type holder for the rim or edge-frame of the respective solar panel.

In a preferred form of the invention, each of the mounting rails includes a fastening channel for receiving and engaging with a fastening element for securely fastening the mounting rails to the frame members at the respective upper and lower edge regions of the inclined panel mounting area. The fastening channel may be formed in an underside of each mounting rail, for example.

In a preferred form of the invention, the mounting system further includes anchoring means for securely anchoring the plurality of frame members to the rooftop surface. The anchoring means may, for example, include one or more attachment strap for attaching each respective frame member to the rooftop surface. Each attachment strap is adapted to engage the base element of each frame member and has a region for fixing the strap to the rooftop surface. For example, each attachment strap may be arranged to extend over, across and/or through the base element of each frame member. Further, the fixing region of each attachment strap is preferably adapted to be fixed to the rooftop surface by adhesive bonding, by solvent bonding, or by cold or hot fusion or welding.

In a preferred form of the invention, the anchoring means includes one or more ballast-carrying members configured to extend over the base element of each frame member and to receive ballast for holding the respective frame member securely in position on the roof surface. Each ballast-carrying member preferably comprises a profiled sheet member having a ballast-carrying portion.

According to another aspect, the present invention provides a mounting system for mounting one or more solar panels, comprising: a support frame having a plurality of frame members adapted to be arranged spaced apart and substantially parallel to one another on a substantially flat rooftop surface, wherein the frame members provide a panel mounting area inclined relative to the rooftop surface for supporting solar panels extending between the frame members; and mounting rails, which are positioned on and extend transverse to the frame members, whereby the mounting rails delimit upper and lower edge regions of the inclined panel mounting area on the support frame. The support frame provides an opening across a substantial frontal extent of the mounting system below the lower edge region of the panel mounting area, such that the opening communicates with a space under the solar panels.

In a further aspect, the present invention provides an assembly consisting of a solar panel mounting system according to the invention described above and a plurality of solar panels mounted thereon.

It is to be appreciated that the terms "upper", "lower", "above", "below", "topside", "underside", "front", "rear", "side", "lateral", "laterally" and other similar terms used herein in respect of various parts of the mounting system of the invention are intended to be given their ordinary meaning in view of the normal or in-use orientation of the mounting system described herein. It is noted, however, that other interpretations of these terms may be appropriate depending on the particular orientation of the system and/or its respective parts at the time.

### Brief Description of the Drawings

The above and further features and advantages of the invention will become more readily apparent from the following detailed description of preferred embodiments of the invention with reference to the accompanying drawings, in which like reference characters identify like features, and in which:
Fig. 1 is a perspective view of a mounting system for solar panels according to a preferred embodiment of the invention, shown assembled with the solar panels;
Fig. 2 is a side view of the mounting system shown in Fig. 1;
Fig. 3 is a plan view of a frame member from the mounting system shown in Fig. 1;
Fig. 4 is a sectioned view of a mounting rail of the mounting system shown in Fig. 1;
Fig. 5 is a perspective view of one part of the anchoring means of the mounting system shown in Fig. 1; and
Fig. 6 is a perspective view of another part of the anchoring means of the mounting system shown in Fig. 1.

### Detailed Description of the Preferred Embodiments

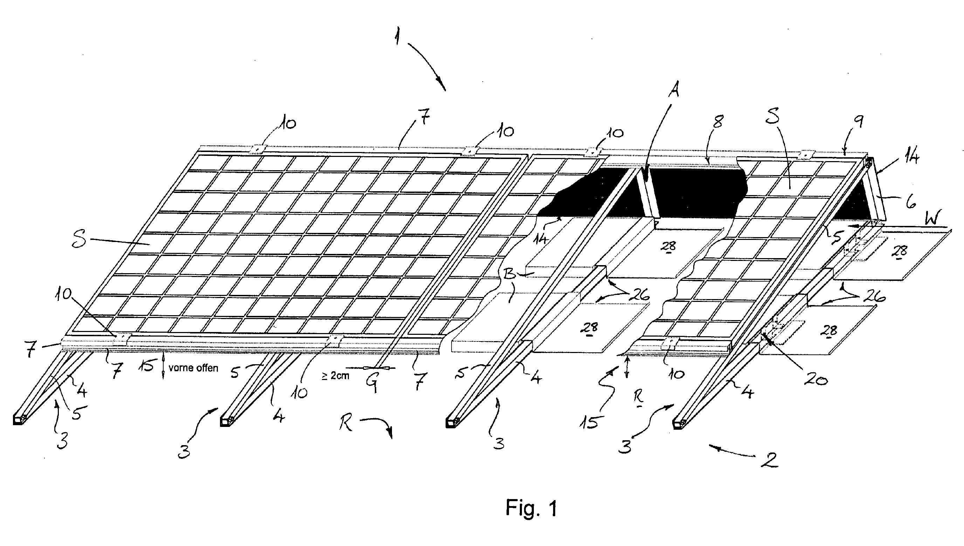

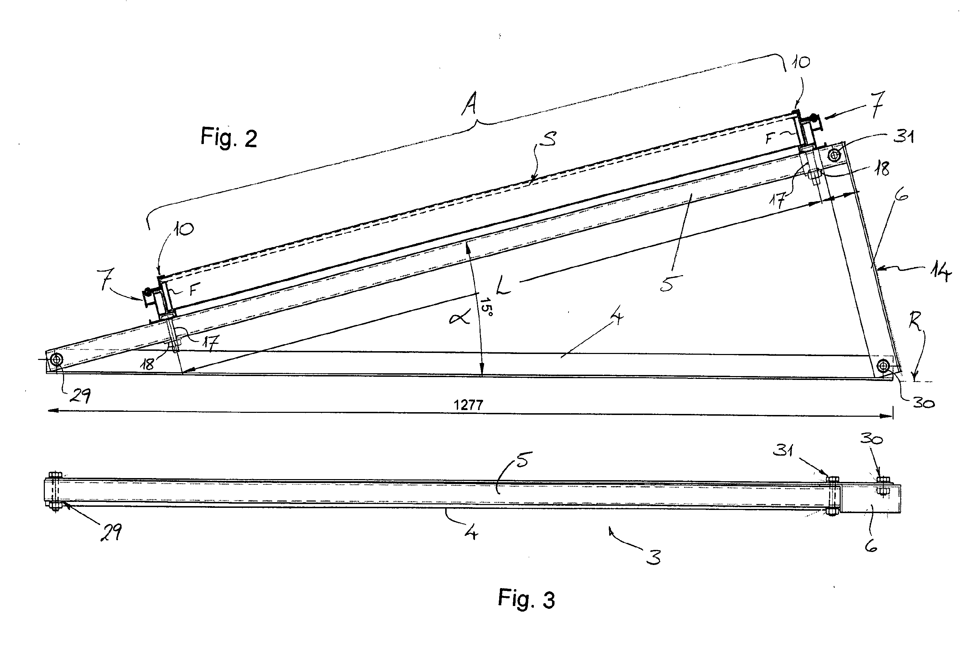

With reference to Figs. 1 and 2 of the drawings, a mounting system 1 for mounting solar panels S (e.g. PV modules) on a substantially flat or horizontal rooftop surface R is shown in an assembled state with two of the solar panels S mounted thereon. The mounting system 1 includes a support frame 2 having a plurality of frame members 3 of triangular construction, which are arranged spaced apart and substantially parallel to one another on the rooftop surface R. Each of the frame members 3 has an open structure of elongate frame elements, including a base element 4 to be secured to the rooftop surface R, a bearing element 5 for receiving the solar panel S and a rear support or strut element 6. Together the frame members 3 provide a panel mounting area A which is inclined relative to the roof-top surface R for supporting the solar panels S, which are arranged extending between at least two of the frame members. In this connection, the bearing element 5 of each of the frame members 3 is pitched or inclined at an angle α in the range of about 10° to 30° (in this case 15°) relative to the base element 4 to define the inclination of the panel mounting area A in the mounting system 1.

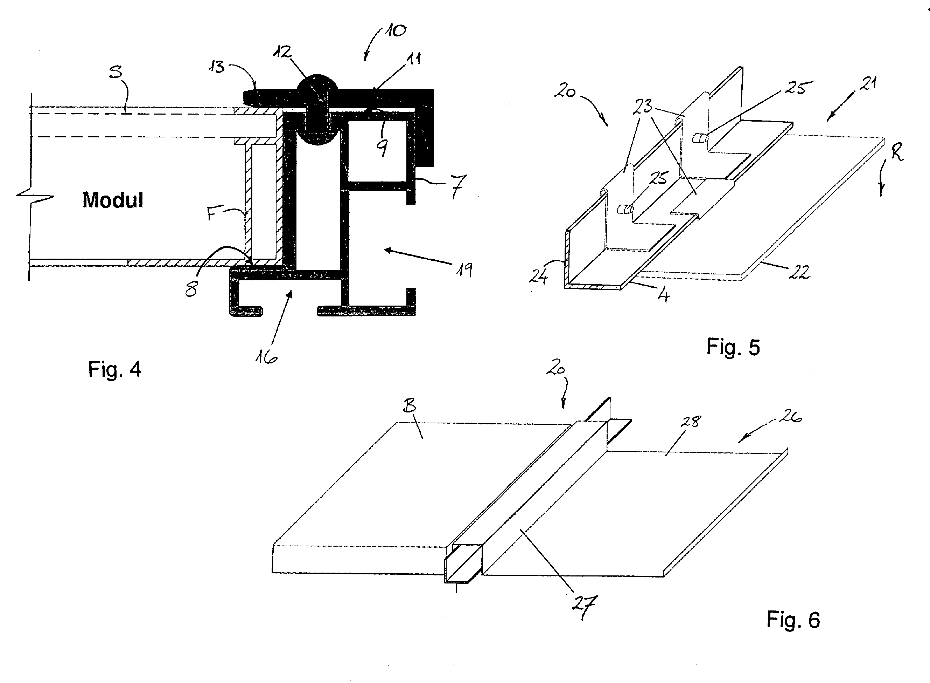

From Figs. 1 and 2 of the drawings it will also be seen that the mounting system 1 further comprises upper and lower mounting rails 7 arranged on the support frame 2 and extending transverse to the triangular frame members 3 such that the mounting rails 7 delimit upper and lower edge regions of the panel mounting area A on the support frame 2. That is, the mounting rails 7 form upper and lower boundaries to the inclined area A extending across the generally parallel and spaced apart bearing elements 5 of the frame members 3 for receiving the solar panels S. Either a single long mounting rail 7 or a combination of multiple, axially aligned mounting rails 7 may be employed to define each of the upper and lower edge regions of the inclined panel mounting area A in the mounting system 1 of the invention, as apparent from drawing Figs. 1 and 2. The cross-section of each mounting rail 7 is shown in Fig. 2 of the drawings, but is more clearly visible in Fig. 4.

With reference to Fig. 4 of the drawings, it can be seen that each of the mounting rails 7 includes a seating area 8 in the form of a shoulder or step in the cross-section of the rail for receiving a rim or edge-frame F of the solar panel S in a position which is at least partially countersunk with respect to a top side 9 of the mounting rail. In other words, the mounting rails 7 do not receive the solar panels S seated on a top-side 9 or upper surface thereof, but rather recessed between lateral side regions of the upper and lower mounting rails 7. In this respect, the mounting system 1 also includes a plurality of bracket or clip members 10 with which the solar panels S are securely attached to the support frame 2. As can be seen in Fig. 1, these bracket members 10 are spaced apart along the length of each of the mounting rails 7, with at least two bracket members 10 provided along the respective upper and lower edges of each solar panel S.

With further reference to Fig. 4, each of the bracket members 10 includes a fastening portion 11 which is rigidly fastened to the top 9 of the mounting rail 7 via a screw or rivet 12, and a holding portion 13 which projects to overlie and/or engage the rim or edge-frame F of the solar panel S received in the seating area 8 of the respective mounting rail 7. In this way, the holding portion 13 of each bracket member 10 acts or serves to securely hold or retain the respective solar panel S in the inclined panel mounting area A on the support frame 2, without exerting any substantial load upon the solar panel S itself. That is, the rim or edge-frame F of each PV-module may experience a light clamping pressure from the holding portion 13 of each bracket or clip member 10, but no substantial forces are applied, such that the individual solar panels S (i.e. PV modules) do not need to be structurally rated or certified by the manufacturer for use with the mounting system 1 of the present invention.

The rear support or strut elements 6 of each of the frame members 3 is configured to support one or more elongate rear panels 14 which extend across and substantially (or entirely) cover or close a rear side of the support frame 2 in the mounting system of the invention. The outer surface of these panels 14 is inclined relative to the base element 4 (i.e. relative to the rooftop surface R) at the same angle as the support or strut elements 6 - i.e. at an angle in the range of about 70 to 80°, and preferably about 75°. Thus, the outer surface of the panels 14 is configured to direct air-flow or wind from behind the mounting system 1 such that it travels upwardly and over an upwardly facing surface of the solar panels S mounted on the support frame 2. In the Northern hemisphere, solar panels S are generally oriented to face in a Southerly direction towards the sun. As such, the rear side of the support frame 2 is generally oriented towards the North. Wind-tunnel investigations have demonstrated that by closing the rear extent of the support frame 2, a desirable aerodynamic geometry can be obtained, with which the degree of vertically upward wind-loading on the solar panel array can be substantially reduced. Furthermore, to complement or enhance the aerodynamic properties of the mounting system 1 achieved by directing the wind from the rear over the upper surfaces of the solar panel array, the support frame 2 in the mounting system 1 of the invention provides an opening 15 across a substantial frontal extent or width of the support frame 2 below the lower edge region of the panel mounting area A defined by the lower mounting rail 7. That is, as is apparent from Fig. 1 of the drawings, a substantially continuous rectangular opening 15 is provided below the lower mounting rail 7 across the front of the support frame 2 and extending between each of the frame members 3. This opening 15 communicates with a space under the solar panels S created by the open framework structure of the support frame 2. In this connection, the lateral sides of the support frame 2, as well as each of the triangular frame members 3 itself, is open to facilitate air-flow from the sides under the solar panels S, e.g. in the direction of the arrow W in Fig. 1. Thus, wind W from the sides can travel through the mounting system 1 beneath the solar panels S and thereby reduce lateral wind-loading on the assembly. By leaving a small gap G, e.g. of the order of about 2 to 5 cm, between each of the solar panels S mounted on the support frame 2, the mounting system 1 also promotes pressure equalization between upper and lower surfaces of the solar panels S. This, in turn, can help reduce vertically upwardly directed forces on the panels S generated through an aerofoil effect caused by air-flow over the solar panel array.

With reference again to Fig. 2 and Fig. 4 of the drawings, it will be seen that each of the mounting rails 7 includes a longitudinally extending channel 16 which opens in a downward direction. This type of channel 16 is known in the art for use with a hammer-head type bolt 17, the head of which is received within the channel 16 and is longitudinally slidable along the length of that channel for positioning the bolt 17 adjacent one of the frame members 3 for securely fastening the mounting rail 7 to that frame member. In this regard, a clamp or bracket 18 may be provided on the bolt 17 to extend around the associated bearing element 5 of the respective frame member 3 for rigidly fastening (e.g. clamping) the mounting rail 7 to that bearing element. A further longitudinally extending channel 19 provided in the mounting rail 7 and opening to a lateral side can be used for accommodating cables connected to the PV modules.

With reference now to Fig. 1 and Figs. 5 and 6 of the drawings, the manner in which the mounting system 1 and solar panel assembly of the invention is secured or anchored to the rooftop R will be described. In this particular embodiment, the base element 4 of each frame member 3 is constructed as an L- or angle-section, one side of which is configured to rest on the substantially horizontal or flat rooftop surface R. An anchoring arrangement 20 includes one or more attachment straps 21 for attaching the base element 4 of each respective frame member 3 to the rooftop surface. Where the rooftop surface R, for example, comprises a flexible membrane or sealing layer, the attachment straps 21 can be particularly advantageous. That is, with an attachment strap 21 it is possible to employ a flexible strap material which is compatible with the material of the rooftop sealing layer and which may be bonded adhesively or welded/fused to the sealing layer without perforating or penetrating that sealing membrane. With reference to Fig. 5, for example, the sealing strap 21 includes a fixing region 22 designed to be bonded or welded to the rooftop surface R and tongue-like extensions 23 which may be folded over and securely fastened to the upright portion 24 of the base element L-section by rivets or screw fasteners 25. The use of such straps 21 in the anchoring arrangement 20 secures the mounting system 1 particularly well against loads acting in the horizontal direction (i.e. in the plane of the rooftop surface R), but is also effective, of course, against loads that act in the upward direction. Further, however, the anchoring arrangement 20 includes a ballast-carrying member 26 as illustrated in Fig. 6. The ballast-carrying member 26 is formed from sheet material (e.g. aluminium or steel sheet) and comprises a channel-or hat-section 27 designed to fit over the base elements 4 of each of the frame members 3 and one or more tray-like portion 28 for receiving ballast B, e.g. in the form of concrete blocks or plates. The ballast part of the anchoring arrangement 20 secures the mounting system 1 particularly well against loads acting in the vertically upward direction, but is, of course, also effective against loads acting horizontally or in the plane of the rooftop surface R.

Considering the structure of each of the triangular frame members 3, it will be noted that each frame member 3 is configured to be substantially collapsible. As already noted above, the base element 4 is formed with an L- or angle-section. The bearing element 5, on the other hand, has an essentially square cross-section dimensioned to substantially correspond with the height (i.e. upright portion 24) of the L-section of the base element 4. As is apparent from Fig. 3, the base element 4 is pivotally or hingedly connected with the bearing element 5 via a pin or screw connection 29. Thus, the bearing element 5 is connected with the base element 4 such that it may be pivoted to be received within the L-section of the base element 4. That is, if a pin or pivot connection 30 between the strut element 6 and the base element 4 were to be released, the bearing element 5 could be folded or collapsed into a substantially flat condition aligned or co-linear with the base element 4. Similarly, the strut element 6 may also be straightened into alignment with the bearing element 5 via a pivot connection 31 between the strut element and the bearing element. This collapsible design of the individual frame members 3 is particularly advantageous during transport of the mounting system 1 due to its space-saving properties.

It will be appreciated that the above description of the preferred embodiments of the invention with reference to the drawings has been made by way of example only. Accordingly, a person skilled in the art will appreciate that various changes, modifications and/or additions may be made to the parts particularly described and illustrated without departing from the scope of the invention as defined in the appended claims.

## Claims

1. Mounting system (1) for mounting one or more solar panels (S), comprising:
a support frame (2) having a plurality of frame members (3) adapted to be arranged spaced apart and substantially parallel to one another on a rooftop surface (R), wherein the frame members (3) provide a panel mounting area (A) inclined relative to a horizontal plane for supporting solar panels (S) extending between the frame members (3);
mounting rails (7) which are positioned on and extend transverse to the frame members (3), such that the mounting rails (7) delimit upper and lower edge regions of the inclined panel mounting area (A) on the support frame (2); and
a surface (14) provided across a rear extent of the support frame (2), wherein the surface (14) is adapted to direct wind over solar panels (S) in the panel mounting area (A) on the support frame (2).

2. Mounting system (1) according to claim 1, wherein the support frame (2) is substantially closed or covered across a rear extent thereof below the upper edge region of the panel mounting area (A), preferably by the wind-directing surface (14), and/or wherein the wind-directing surface (14) is provided by a sheet or panel configured to be positioned below the upper edge region of the panel mounting area (A).

3. Mounting system (1) according to claim 1 or claim 2, wherein the wind-directing surface (14) across the rear extent of the support frame is inclined at an angle in the range of about 55° to 85° relative to the horizontal plane, and preferably in the range of about 65° to 80°.

4. Mounting system (1) according to any one of the preceding claims, wherein the support frame (2) provides an opening (15) across a substantial frontal extent thereof below the lower edge region of the panel mounting area (A), the opening (15) communicating with a space under the solar panels (S).

5. Mounting system (1) according to any one of the preceding claims, wherein securing means for securely attaching the solar panels (S) to the support frame (2) are provided on the mounting rails, the securing means comprising a plurality of bracket or clip members (10) which are fastened to the mounting rails (7) to at least partially overlie an edge of the respective solar panels (S).

6. Mounting system (1) according to any one of the preceding claims, wherein each of the mounting rails (7) includes a seating area (8), preferably in the form of a shoulder or step in a cross-section of the rail (7), for receiving an edge (F) of the solar panel (S) at least partially countersunk with respect to a top-side (9) of the mounting rail (7).

7. Mounting system (1) according to any one of the preceding claims, wherein each of the mounting rails (7) includes a fastening channel (16) for receiving and engaging with a fastening element (17) for securely fastening the mounting rails (7) to the frame members (3) at the upper and lower edge regions of the inclined panel mounting area (A).

8. Mounting system (1) according to any one of the preceding claims, wherein each frame member (3) comprises a triangular construction of elongate frame elements including: a base element (4) configured to be secured to the rooftop surface (R), a pitched or inclined bearing element (5) forming the inclined panel mounting area (A) for receiving the solar panel (S), and a rear support element (6).

9. Mounting system (1) according to claim 8, further comprising anchoring means (20) for securely anchoring the plurality of frame members (3) to the rooftop surface (R), wherein the anchoring means (20) includes at least one attachment strap (21) for attaching each respective frame member (3) to the rooftop surface (R), each of the attachment straps (21) being adapted to engage the base element (4) of each frame member (3) and having a fixing region (22) for fixing the strap to the rooftop surface.

10. Mounting system (1) according to claim 8 or claim 9, wherein each of the attachment straps (21) is arranged to extend over, across and/or through the base element (4) of each frame member (4), and/or wherein the fixing region (22) of each attachment strap (21) is adapted to be fixed to the rooftop surface (R) by adhesive or solvent bonding, or by hot or cold fusion or welding.

11. Mounting system (1) according to any one of claims 8 to 10, comprising anchoring means (20) for securely anchoring the plurality of frame members (3) to the rooftop surface (R), wherein the anchoring means (20) includes one or more ballast-carrying members (26) configured to extend over the base element (4) of each frame member (3) and to receive ballast (B) for holding the respective frame member (3) securely in position on the rooftop surface (R), each ballast-carrying member (26) preferably comprising a profiled sheet member having a ballast-carrying portion (28).

12. Mounting system (1) according to any one of the preceding claims, wherein the frame members (3) of the support frame (2) provides a panel mounting area (A) which is inclined relative to a horizontal plane at an angle in the range of about 10° to 30°, preferably in the range of about 10° to 20°, and most preferably at an angle of about 15°.

13. Mounting system (1) according to any one of the preceding claims, wherein each frame member (3) is collapsible to a substantially flat configuration for transport, the elements (4, 5, 6) of each frame member (3) preferably being in hinged connection with one another; and/or
wherein the base element (4) of each of frame member (3) comprises an elongate open section, such as a channel section or an L-section, and wherein the bearing element (5) is adapted to be received within the open section of the base element (4) in a collapsed configuration.

14. Mounting system (1) for mounting one or more solar panels (S), comprising:
a support frame (2) having a plurality of frame members (3) adapted to be arranged spaced apart and substantially parallel to one another on a rooftop surface (R), wherein the frame members (3) provide a panel mounting area (A) inclined relative to a horizontal plane for supporting solar panels (S) extending between the frame members (3); and
mounting rails (7) which are positioned on and extend transverse to the frame members (3), such that the mounting rails (7) delimit upper and lower edge regions of the inclined panel mounting area (A) on the support frame (2);
wherein the support frame (2) is configured to be substantially closed or covered across a rear extent thereof below the upper edge region of the panel mounting area (A).

15. Mounting system (1) for mounting one or more solar panels (S), comprising:
a support frame (2) having a plurality of frame members (3) adapted to be arranged spaced apart and substantially parallel to one another on a rooftop surface (R), wherein the frame members (3) provide a panel mounting area (A) inclined relative to a horizontal plane for supporting solar panels (S) extending between the frame members (3); and
mounting rails (7) which are positioned on and extend transverse to the frame members (3) to delimit upper and lower edge regions of the inclined panel mounting area (A) on the support frame;
wherein the support frame (2) provides an opening (15) across a substantial frontal extent thereof below the lower edge region of the panel mounting area (A), the opening (15) communicating with a space under the solar panels (S).
